# EUROPEAN PATENT SPECIFICATION

(11) **EP 0 364 421 B1**
(45) Date of publication and mention of the grant of the patent: **09.06.1993**
(21) Application number: 89850314.9
(22) Date of filing: 25.09.1989
(51) Int. Cl.: B23B 27/14

(54) **Cutting insert**
Schneideinsatz
Plaquette de coupe

(30) Priority: 29.09.1988 FR 8812737
(43) Date of publication of application: 18.04.1990
(73) Proprietor: SAFETY S.A., F-92107 Boulogne-Billancourt Cédex (FR)
(72) Inventor: Fouquer, Richard, F-37100 Tours (FR); Gibert, Jocelyn, F-37300 Tours (FR)
(74) Representative: Taquist, Lennart

(56) References cited:
- US-A- 4 335 984
- PATENT ABSTRACTS OF JAPAN, vol. 8, no. 83 (M-290)[1520], 17 avril 1984; & JP-A-591105 (MITSUBISHI KINZOKU K.K.) 06-01-1984
- PATENT ABSTRACTS OF JAPAN, vol. 9, no. 146 (M-389)[1869], 21 juin 1985; & JP-A-6025604 (MITSUBISHI KINZOKU K.K.) 08-02-1985

## Description

The present invention relates to a cutting insert for chipforming machining of workpieces of metal according to the preamble of claim 1. In particular indexable cutting inserts used with toolholders can be of triangular, square, rhombic, rhomboidic or other form. The basic form of such cutting inserts comprises two opposed top and bottom surfaces and a peripheral wall extending therebetween, the cutting edges being formed by the transition between the top surface and said peripheral wall of the insert. The top surface of the insert is a chip face or such a surface which is in contact with the formed chip at the cutting operation, and said peripheral wall being a clearance face in relation to the workpiece.

It is generally desirable that these inserts should have a geometry that will minimize the power required in the metalworking operations by controlling the geometry of the chips produced and that the insert chip control geometry should be capable of controlling chips over a wide range of parameters such as depth of cut or feed rate.

A cutting insert is previously disclosed in US-A-4,335,984 comprising a polygonal body of wear resistant material with a chip breaker groove provided along said cutting edges whereby said groove comprises a row of depressions including a pair of end depressions extending along end portions of the cutting edge. This insert lacks the provision of a continuous land area extending inwardly from said cutting edge combined with longer cutting edge end portions than the intermediate cutting edge portions. In view thereof the strength of the edges of the insert and its capability of controlling geometry of the chips will be negatively effected.

The above mentioned objects are achieved by a cutting insert according to claim 1.

In a broad aspect of the invention there is provided a cutting insert comprising a polygonal body of wear resistant material including opposed top and bottom surfaces and peripheral walls therebetween with cutting edges formed at the intersection between said peripheral walls and said top and bottom surfaces, a chip breaker groove being provided along said cutting edges constituted by a number of concave depressions, of which the depressions extending towards each corner have a length that exceeds the length of the other concave depressions along same edge, and that the cutting edge is straight along said corner depressions whereas the cutting edge is wave-shaped at the intersection between said shorter concave depressions and said peripheral wall.

In a particular aspect of the invention there is a secondary depression in each corner defined by a sloping flat surface that extends from the inner margin of a land provided along each edge and extends downwards to a position below the level of a pair of concave depressions that extend towards said corner, and whereby there is provided a raised elongated rib portion extending along the bisector whilst terminated at a certain distance from said secondary corner depression.

By the above arrangement the insert may be well utilized to machine cuts through small and medium feed rates while simultaneously reducing cutting forces and temperatures thereby increasing the insert's strength and lifetime.

When such an insert is used for finishing the cut has a small depth and the width of the chip is small, and the chip also being thinner than in rough machining. The corner depression of this insert combined with the raised rib will break this thinner chip because of the sharper bend. In machining with a greater cutting depth the chip is thin but broader and thus is extending some distance along the cutting edge. For breaking also such chips the main chip breaker is constituted by a number of concave depressions separated by smoothly curved ridges.

Hence, by the above arrangement the insert may be utilized to machine cuts with varying chip loads while simulatenously reducing cutting forces and temperatures thereby increasing the insert's strength and lifetime.

In a more particular aspect of the invention there is provided a flat top surface on said raised rib portion along the bisector in each corner whereby the flat tops of said ribs are located in a common horizontal plane that is located above the horizontal plane for a flat land area that extends around each rounded corner region. By this arrangement the insert is enabled to have a very stable support against a bottom supporting surface in an insert pocket of a relevant toolholder.

The invention will now be more closely described in connection with the appended drawings showing preferred embodiments of the insert, wherein further characterizing features and advantages will be apparent.
Fig. 1 is a perspective view of one embodiment of an indexable cutting insert according to the invention,
Fig. 2 is a sectional view taken along the line 2-2 in Fig. 1,
Fig. 3 is a plan view of the cutting insert shown in Fig. 1.
Fig. 4 is a sectional view taken along the line 4-4 in Fig. 1.

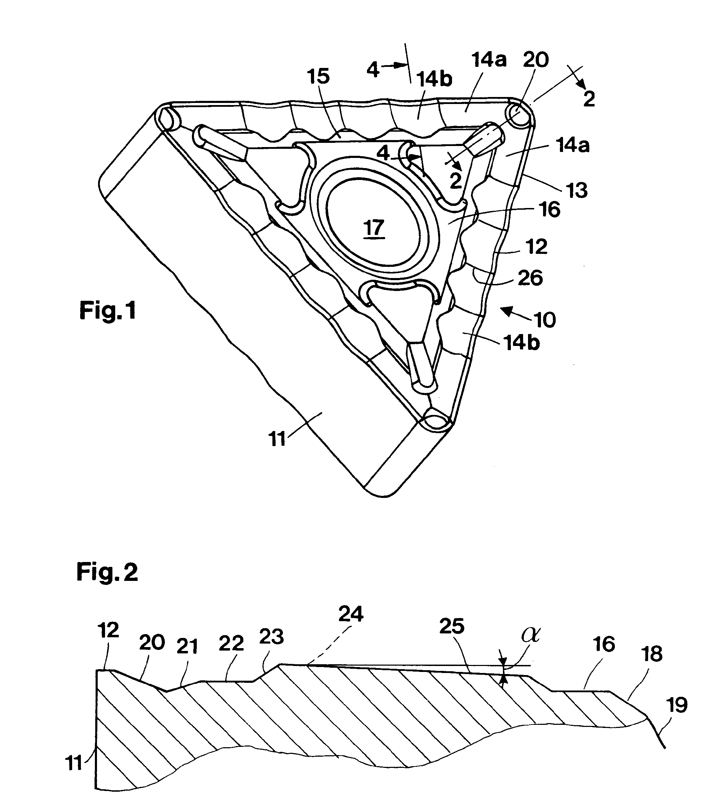

The cutting insert embodiment in Figs. 1-3 includes an insert 10 of wear resistant material with substantially triangular top and bottom chipbreaking faces joined by side walls 11 with rounded corners whereby said side wall 11 is in perpendicular relation to planes containing said top and bottom chipbreaking faces. A land area 12 extends about the periphery of each said top and bottom chipbreaking faces. Three indexable cutting edges 13 are defined by the intersection of said side wall 11 with said land area 12.

The chip breaker groove along each cutting edge iscomposed of a first sloping or descending concave surface 14 a that extends from the inner margin of each land area 12 at the corner region and joins another curved surface 15, while a number of other concave depressions 14 b being located between said first concave surfaces 14 a at each corner. The curved surface 15 joins a planar surface 16 formed around a central aperture 17 whilst oriented perpendicular to the side wall 11, said aperture 17 being defined by two obtuse angled hole walls 18, 19 adapted for the receipt of a suitable locking pin employed to clamp the insert into a pocket wall of a tool holder.

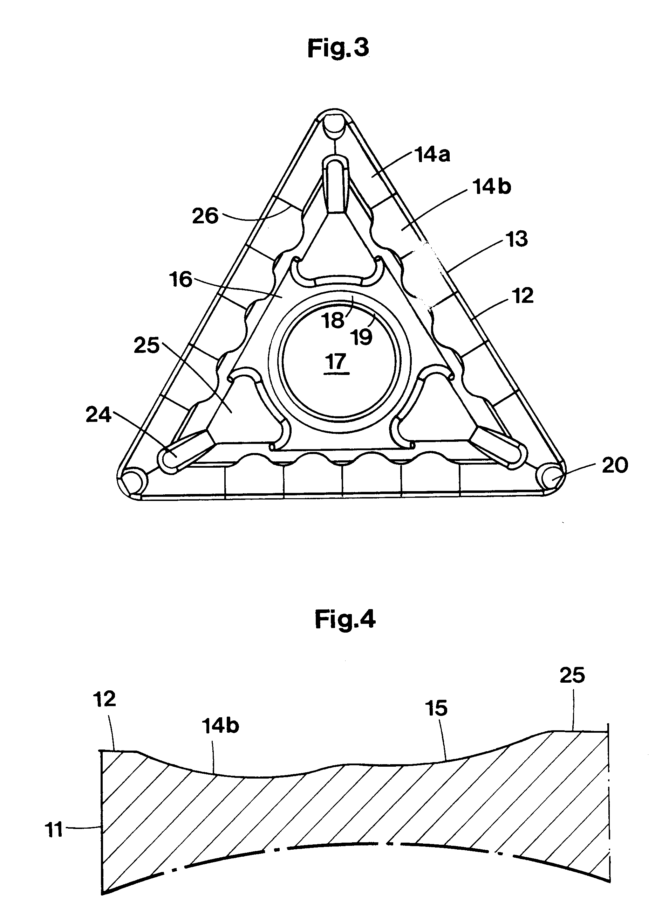

At each cutting corner region there is a depression defined by a sloping flat or somewhat curved surface 20 that extends downwards inbetween said first concave surfaces 14 a and below the latter from the inner margin of said land 12 to a position, seen in the direction of the bisector, where it is joined by a raised area 21 followed by an intersection line 22 along the bisector represented by the junction line between two adjacent concave surfaces 14 a meeting each other at said bisector. Intersection line 22 is joining another raised area 23 which extends upwards to a raised elongated rib with a flat top surface 24 which is elongated in the direction of the bisector and then extends to a triangular shaped area 25 slightly tapered downwards towards the center of the insert and confined by straight diverging edges towards the centre of the insert. The taper angle α of surface 25 should be small, suitably 0-2° related to the horizontal plane. This rib top area 24 is flat and located at each corner region and is intended to act as a bottom supporting surface when the insert is clamped into its pocket of a tool holder. For that purpose each said top surface area 24 is flat and all areas 24 at each corner region are located at a common horisontal plane located above the horisontal plane which includes the plane of the land portion 12 that extends around the corner of the insert. As furthermore appears from Fig. 1 and 3 the inner edge of the concave depressions 14 b has a wavy course at its intersection with said curved surface 15. The cutting edges 13 have a straight contour at the corner regions, whereas said edges 13 have a wave-shaped contour between said corner regions. Each concave surface 14 a and 14 b has a smooth concave course as it descends to the line of intersection with said inner curved surface 15. As a consequence of this design this insert will have a chip breaker groove constituted by a number of concave depressions overlapping each other along said cutting edge whilst having raised smoothly curved ridges 26 therebetween which are oriented substantially perpendicular in relation to the cutting edge 13.

At the same time it is found suitable to provide the concave depressions 14 a at each corner region with a straight course at its intersection with said inner curved surface 15. Preferably, the extension of surface 14 a is larger, suitably 1.5-2 times larger than the length of surface 14 b when measured along the cutting edge 13.

It is found suitable to design each concave depression 14 b to be non-spherical such that it has a radius of curvature, looking perpendicularly to the edge, for instance about 1.50 mm, that is smaller than the radius of curvature of said depression when looking parallel with the cutting edge 13, such as for instance 1.70 mm.

## Claims

1. Cutting insert for chipforming machining of metal workpieces in the shape of a polygonal body (10) of wear resistant material, comprising opposed top and bottom surfaces and a plurality of peripheral walls (11) extending therebetween, a plurality of cutting edges (13) being formed by the intersection between said peripheral walls and at least one of said top and bottom surfaces, a chip breaker groove being located along the edges and comprising a row of depressions, said row of depressions including a pair of end depressions (14a) extending along end portions of a respective cutting edge, each said cutting edge end portion being straight as said insert is viewed in side elevation and arranged at opposite ends of the associated cutting edge and situated adjacent respective corners of said insert, and a series of intermediate depressions (14b) extending between said pair of end depressions and said intermediate depressions extending along respective intermediate portions of a respective cutting edge, **characterized** in that a continuous land area (12) extends between said plurality of cutting edges (13) and said chip breaker groove, whereby each of said cutting edge end portions is longer in length than each of said cutting edge intermediate portions, and said cutting edge intermediate portions forms a wave shape as said insert is viewed in side elevation.

2. Cutting insert as defined in claim 1,
**characterized** in that there is a secondary depression in each corner defined by a sloping flat or somewhat curved surface (20) that extends from the inner margin of the land (12) and downwards to position below the level of those concave depressions (14 a) extending toward the cutting corner.

3. Cutting insert as defined in claim 1 or 3,
**characterized** in that there is provided a raised elongated rib portion (24) with flat top in each cutting corner extending in the direction of the bisector terminated at a certain distance from said secondary corner depression (20).

4. Cutting insert as defined in claim 3,
**characterized** in that said elongated raised rib (24) is adjacent to a substantially triangular projection (25) with a flat tapered top surface confined by straight edges that diverge towards the centre of the insert.

5. Cutting insert as defined in any of the claims 1-4,
**characterized** in that the flat top surfaces of raised rib projections (24) are located in a common horizontal plane located above the horizontal plane common for the land portions (12) that extends around each corner region.

6. Cutting insert as defined in any of the claims 1-5,
**characterized** in that the concave depressions (14b) have a wavy course at their intersection with an inner descending surface (15) whereas concave depressions (14 a) at the corner region each has a straight course at its intersection with said descending surface (15).

7. Cutting insert as defined in any of the claims 1-6,
**characterized** in that the depressions (14 a) are separated from each other and from concave depression (14 b) by raised smoothly curved ridges (26) that are oriented perpendicular in relation to the cutting edge (13).

8. Cutting insert as defined in any of the claims 1-7,
**characterized** in that each concave depression (14 b) has a radius of curvature, looking perpendicularly to the edge, that is smaller than the radius of curvature when looking parallel to the edge (13).

## Patentansprüche

1. Schneideinsatz für die spanformende, spanabhebende Bearbeitung metallischer Werkstücke, wobei der Schneideinsatz die Form eines polygonalen Körpers (10) aus einem verschleißfesten Material hat, welcher gegenüberliegende Ober- und Unterseiten und eine Mehrzahl von umlaufenden Wänden (11) hat, die sich zwischen jenen erstrecken, wobei eine Mehrzahl von Schneidkanten (13) durch den Schnitt zwischen den umlaufenden Wänden und zumindest einer der Ober- oder Unterseiten gebildet wird, eine Spanbrechernut entlang der Kanten angeordnet ist und eine Reihe von Eindrückungen aufweist, wobei die Reihe von Eindrückungen ein Paar von Endeindrückungen (14a) aufweist, die sich entlang von Endabschnitten einer jeweiligen Schneidkante erstrekken, wobei jeder dieser Schneidkantenendabschnitte in einer Seitenansicht auf den Schneideinsatz gerade verläuft und die Endabschnitte an den gegenüberliegenden Enden der zugehörigen Schneidkante angeordnet sind und an die jeweiligen Ecken des Schneideinsatzes angrenzend liegen, und wobei sich eine Reihe von Zwischeneindrückungen (14b) zwischen einem solchen Paar von Endeindrückungen erstreckt und die Zwischeneindrückungen sich entlang der jeweiligen Zwischenabschnitte einer entsprechenden Schneidkante erstrecken, dadurch gekennzeichnet, daß sich ein kontinuierlicher Bandbereich (12) zwischen der Mehrzahl von Schneidkanten (13) und der Spanbrechernut erstreckt, wobei jeder der Schneidkantenendabschnitte länger ist als jeder der Zwischenabschnitte der Schneidkante und die Zwischenabschnitte der Schneidkante in einer Seitenansicht auf den Einsatz eine Wellenform bilden.

2. Schneideinsatz nach Anspruch 1, dadurch gekennzeichnet, daß eine sekundäre Eindrückung in jeder Ecke vorhanden ist, welche durch eine geneigte flache oder etwas gekrümmte Oberfläche (20) definiert wird, die sich von dem inneren Rand des Bandes (12) und nach unten zu einer Position unterhalb des Niveaus der konkaven Eindrükkungen (14a) erstreckt, die sich in Richtung der Schneidkante erstrecken.

3. Schneideinsatz nach Anspruch 1 oder 2, dadurch gekennzeichnet, daß ein erhabener, länglicher Rippenabschnitt (24) mit einer flachen Oberseite an jeder Schneidecke vorgesehen ist, welcher sich in Richtung der Winkelhalbierenden erstreckt und in einem gewissen Abstand von der sekundären Eckeindrückung (20) endet.

4. Schneideinsatz nach Anspruch 3, dadurch gekennzeichnet, daß die längliche, erhabene Rippe (24) an einen im wesentlichen dreieckigen Vorsprung (25) angrenzend liegt, der eine flache, schräg zulaufende Oberfläche hat, die von geraden Kanten begrenzt wird, die in Richtung des Zentrums des Einsatzes divergieren.

5. Schneideinsatz nach einem der Ansprüche 1 bis 4, dadurch gekennzeichnet, daß die flachen Oberseiten der erhabenen Rippenvorsprünge (24) in einer gemeinsamen horizontalen Ebene liegen, die oberhalb der gemeinsamen horizontalen Ebene der Bandabschnitte (12), welche sich um jeden Eckbereich herum erstrecken, liegt.

6. Schneideinsatz nach einem der Ansprüche 1 bis 5, dadurch gekennzeichnet, daß die konkaven Eindrückungen (14b) an ihrem Übergang bzw. ihrer Schnittlinie mit einer inneren, abfallenden Fläche (15) einen wellenförmigen Verlauf haben, während die konkaven Eindrückungen (14a) in dem Eckbereich jeweils einen geraden Verlauf an ihrer Schnittlinie mit der abfallenden Fläche (15) haben.

7. Schneideinsatz nach einem der Ansprüche 1 bis 6, dadurch gekennzeichnet, daß die Eindrückungen (14a) voneinander und von der konkaven Eindrückung (14b) durch erhabene, sanft gekrümmte Rippen bzw. Grate (26) getrennt sind, die bezüglich der Schneidkante (13) rechtwinklig ausgerichtet sind.

8. Schneideinsatz nach einem der Ansprüche 1 bis 7, dadurch gekennzeichnet, daß jede konkave Eindrückung (14b) einen Krümmungsradius hat, der senkrecht zur Kante kleiner ist als der Krümmungsradius parallel zu der Kante (13).

## Revendications

1. Plaquette de coupe destinée à l'usinage de pièces métalliques à usiner par enlèvement de copeaux, en forme de corps polygonal (30) en matière résistant à l'usure, comprenant des faces supérieure et inférieure opposées et une série de parois périphériques (11) s'étendant entre elles, une série de bords de coupe (13) étant formée par l'intersection desdites parois périphériques et d'au moins l'une desdites surfaces supérieure et inférieure, une rainure de rupture de copeaux étant située le long des bords et comprenant une ligne de dépressions, ladite ligne de dépressions incluant une paire de dépressions d'extrémités (14a) s'étendant le long de parties d'extrémités d'un bord de coupe respectif, chacune desdites parties d'extrémités de bord de coupe étant droite lorsque ladite plaquette est vue en élévation de côté, et disposées à des extrémités opposées du bord de coupe associé et situées près de coins respectifs de ladite plaquette, et une série de dépressions intermédiaires (14b) s'étendant entre ladite paire de dépressions d'extrémités et lesdites dépressions intermédiaires s'étendant le long de parties respectives intermédiaires d'un bord de coupe respectif, **caractérisée** en ce qu'une zone continue de crête du taillant (12) s'étend entre ladite série de bords de coupe (13) et ladite rainure de rupture de copeaux, grâce à quoi chacune desdites parties d'extrémités de bord de coupe est d'une longueur supérieure à celle de chacune desdites parties intermédiaires de bord de coupe et lesdites parties intermédiaires de bord de coupe constituent une forme d'onde lorsque ladite plaquette est vue en élévation de côté.

2. Plaquette de coupe selon la revendication 1,
**caractérisée** en ce qu'il existe dans chaque coin une dépression secondaire définie par une surface inclinée, plate ou quelque peu incurvée (20), qui s'étend depuis la marge intérieure de la crête du taillant (12) et vers le bas vers une position située au-dessous du niveau des dépressions concaves (14a) qui s'étendent vers le coin de coupe.

3. Plaquette de coupe selon la revendication 1 ou 2,
**caractérisée** en ce qu'il est prévu dans chaque coin de coupe une partie de nervure allongée surélevée (24) s'étendant dans la direction du bissecteur, terminée à une certaine distance de ladite dépression secondaire de coin (20).

4. Plaquette de coupe selon la revendication 3,
**caractérisée** en ce que ladite nervure allongée surélevée (24) est adjacente à une saillie sensiblement triangulaire (25) à surface supérieure effilée plate confinée par des bords droits qui divergent en direction du centre de la plaquette.

5. Plaquette de coupe selon l'une quelconque des revendications 1 à 4,
**caractérisée** en ce que les surfaces supérieures plates des saillies des nervures surélevées (24) sont situées dans un plan horizontal commun situé au-dessus du plan horizontal commun des parties de crêtes de taillant (12) qui s'étend autour de chaque région de coin.

6. Plaquette de coupe selon l'une quelconque des revendications 1 à 5,
**caractérisée** en ce que les dépressions concaves (14b) présentent un profil ondulé à leur intersection avec une surface descendante intérieure (15) alors que les dépressions concaves (14a) de la région de coin présentent chacune un profil droit à leur intersection avec ladite surface descendante (15).

7. Plaquette de coupe selon l'une quelconque des revendications 1 à 6,
**caractérisée** en ce que les dépressions (14a) sont séparées l'une de l'autre, ainsi que d'une dépression concave (14b), par des nervures surélevées légèrement incurvées (26) qui sont orientées perpendiculairement au bord de coupe (13).

8. Plaquette de coupe selon l'une quelconque des revendications 1 à 7,
**caractérisée** en ce que le rayon de courbure de chaque dépression concave (14b), lorsque l'on regarde perpendiculairement au bord, est plus petit que le rayon de courbure lorsque l'on regarde parallèlement au bord (13).
